(19) Europäisches Patentamt
European Patent Office
Office européen des brevets

(11) Publication number: **0 264 508 B1**

(12) # EUROPEAN PATENT SPECIFICATION

(45) Date of publication of patent specification: **11.09.91** (51) Int. Cl.⁵: **C08F 8/48**

(21) Application number: **86308324.2**

(22) Date of filing: **24.10.86**

(54) **Process for the production of heat resistant thermoplastic copolymer.**

(43) Date of publication of application:
**27.04.88 Bulletin 88/17**

(45) Publication of the grant of the patent:
**11.09.91 Bulletin 91/37**

(84) Designated Contracting States:
**DE FR GB IT NL**

(56) References cited:
**GB-A- 1 437 176**
**US-A- 3 137 660**

**CHEMICAL ABSTRACTS, vol. 104, no. 6, February 1986, Columbus, OH (US); p. 13, no. 34525f**

**CHEMICAL ABSTRACTS, vol. 102, no. 26, July 1985, Columbus, OH (US); p. 12, no. 221359a**

(73) Proprietor: **SUMITOMO CHEMICAL COMPANY, LIMITED**
**Kitahama 4-chome 5-33**
**Chuo-ku Osaka 541(JP)**

(72) Inventor: **Kato, Yasuyuki**
**5-4, Hoshigoe-cho**
**Niihama Ehime(JP)**
Inventor: **Yuyama, Masahiro**
**7-24, Hoshigoe-cho**
**Niihama Ehime(JP)**
Inventor: **Moritani, Masahiko**
**15-38, Takatsu-cho**
**Niihama Ehime(JP)**
Inventor: **Matsuura, Hideaki**
**2-6-521, Ikku-cho**
**Niihama Ehime(JP)**
Inventor: **Iijima, Susumu**
**20-1, Hoshigoe-cho**
**Niihama Ehime(JP)**
Inventor: **Hashimoto, Tsuyoshi**
**1-17-43, Hachiman-cho**
**Niihama Ehime(JP)**

(74) Representative: **Hardisty, David Robert et al**
**BOULT, WADE & TENNANT 27 Furnival Street**
**London EC4A IPQ(GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a process for the production of a heat resistant thermoplastic copolymer. More particularly, it relates to a process for the production of a thermoplastic copolymer having excellent heat distortion resistant which is characterized by converting carboxyl group in the molecule of said polymer into anhydride group by heat-treating the raw copolymer containing carboxyl group in the presence of a ring-closing promoter.

Thermoplastic copolymers, particularly polymethyl methacrylate, polystyrene, and methyl methacrylate-styrene copolymer, have excellent characteristics such as excellent transparency, mechanical properties and processability and hence have widely been used in various fields such as automobile parts, electrical parts, industrial parts, and miscellaneous goods.

However, with expansion of utilities of these materials, it is required to obtain resin materials having more improved heat distortion resistance and more improved transparency and mechanical properties. Intensive investigation has been done for obtaining materials having such required properties. For instance, it is known that a polymer having excellent heat distortion resistance can be produced by copolymerizing methacrylic acid and methyl methacrylate and/or styrene. Generally speaking, however, a methacrylic copolymer resin has high water absorption properties and hence show low heat resistance due to the water absorption, and further, when the resin is processed to obtain formed products, the products have unsatisfactorily splash (stripe) on the back surface thereof due to generation of volatile materials induced by dehydration during the forming and processing steps.

In order to eliminate such a drawback, it is proposed in U.K. Patent 1,437,176 that a certain amount of an ethylenically unsaturated carboxylic acid group copolymerized in the polymer is converted into a carboxylic anhydride group, and thereby, there can be produced a heat resistant thermoplastic copolymer which can give a formed product having no splash on the back. It is also known that such a polymer is advantageous in the high resistance to crazing induced by solvents and further resistance to water. However, in order to convert sufficiently the carboxyl group into anhydride group, it is required to pass the copolymer through an extruder repeatedly, and hence, this process has less productivity and is hardly practised on an industrial scale.

Japanese Patent First Publication (Kokai) No. 217501/1983 discloses a novel copolymer comprising mainly methacrylic acid unit which has excellent heat resistance and heat stability. According to the working examples in this literature, the copolymer is produced by copolymerizing methyl methacrylate and/or styrene and methacrylic acid by a continuous bulk polymerization and transferring the resulting copolymer and unreacted materials to a vacuum chamber at a high temperature, wherein the unreacted materials are removed and a six-membered cyclic anhydride group is formed. However, it is necessary to retain the copolymer resin within the high temperatures vacuum chamber for a long period of time in order to form the six-membered cyclic anhydride group, which results unfavourably in colouring of the polymer.

Besides, Japanese Patent First Publication (Kokai) No. 87449/1977 discloses a process for the production of methacrylic resin composition having excellent fluidity and heat resistance by using an unsaturated carboxylic acid. However, according to this process, less amount of unsaturated carboxylic acid is copolymerized, and hence, the improvement of the resistance is insufficient.

Furthermore, US-A-3 137 660 is particularly concerned with a method for preparing polymers having a plurality of recurring alpha-methylene glutaric anhydride groups as part of the main chain thereof, comprising treating under substantially anhydrous conditions a member selected from the class consisting of (A) (1) at least one substantially anhydrous monomeric monocarboxylic acid having from 3 to 13 carbon atoms and a terminal $CH_2=$ group in a position beta to the carboxyl group as the sole aliphatic carbon-to-carbon unsaturation and containing only the elements carbon, hydrogen, oxygen and not more than 1 halogen in the alpha position, (2) mixtures of a major proportion of (1) with at least one other monoolefinic monomer which is copolymerizable with (1), (3) mixtures of (1) and .01 to 30% by weight based on said (1) of a polyunsaturated monomer which is copolymerizable with said (1), and (4) mixtures of (2) with .01 to 30% by weight based on said (2) of a polyunsaturated monomer which is copolymerizable with said (2), in the presence of a free radical catalyst and at a polymerising temperature, and (B) polymers of said (A) at an elevated temperature, with (C) at least one mole of a dehydrating agent per molar equivalent of carboxyl in said (A) and (B) said dehydrating agent being selected from the class consisting of non-polymerizable carboxylic anhydrides of acids having at least 2 carbon atoms and up to about 18 carbon atoms, acid halides of said non-polymerizable acids, phosphorus halides, phosphorous oxyhalides, sulfur oxyhalides, wherein the halogen of said dehydrating agent has an atomic weight of from about 35.5 to about 80 and $P_2O_5$ said (B) being treated for a time sufficient to convert at least about 35% of the carboxyl groups to anhydride groups on the main polymer chain.

Also there is disclosed in Chemical Abstracts, Vol. 104, No. 6, February 1986, page 13, abstract No. 34525f of JP-A-60120707 colourless, clear heat-resistant copolymers which are prepared by heat-treating a solution of a copolymer containing a methyl methacrylate unit and a (meth)acrylic acid unit in vacuo for to to 60 minutes to form a polymer containing a 6-membered cyclic acid anhydride unit. A particular copolymer was produced from a mix of 34% styrene, 37% methyl methacrylate and 9% methacrylic acid, and 20% by weight PhEt. After polymerisation the resulting polymer solution was supplied via a heater to a vaporizing tank where the solution was held at 255° C and 20 Torr for 25 minutes and the unreacted monomers and the solvent were removed and the 6-membered ring acid anhydride unit was formed.

Also it has been disclosed in Chemical Abstracts, Vol. 102, No. 26, July 1985, page 12, abstract No. 221359a of JP-A-60020905 that thermoplastic polymers comprising a 6-membered cyclic acid anhydride unit were produced and had good heat reistance, transparency and melt fluidity; the polymers were produced for example from 50 parts methyl methacrylate and 50 parts tert-butyl methacrylate, and after copolymerisation the product was heated to 230° C with evolution of water and methanol to give a polymer containing 62% of the cyclic anhydride units.

Thus, some of the known copolymers at least have various problems such as high water absorption properties, bad appearance of the formed product, low productivity, colouring of the product, less improvement in heat resistance, and the like.

According to the intensive study of the present inventors, it has been found that the methacrylic and/or acrylic acid group copolymerized in the polymer can be converted into the anhydride group by using a specific ring-closing promoter and thereby there can be produced the desired copolymer having excellent heat distortion resistance.

An object of the invention is to provide an improved process for the production of a thermoplastic copolymer having excellent heat distortion resistance. Another object of the invention is to provide an improved process for promoting the conversion of the copolymerized acrylic or methacrylic acid group into the anhydride group. These and other objects and advantages of the invention will be apparent to skilled persons from the following description.

This present invention provides a process for the production of a copolymer having excellent heat distortion properties, which comprises heat-treating a raw copolymer comprising (1) vinyl monomer units and (2) methacrylic acid units and/or acrylic acid units in the presence of 0.001 to 1 % by weight of as a ring-closing promoter a basic compound thereby to convert methacrylic and/or acrylic acid units into six membered cyclic anhydride units, and wherein the raw copolymer has a content of methacrylic and/or acrylic acid units of 5 to 50 % by weight.

The raw copolymer used in this invention includes copolymers of methacrylic and/or acrylic acid and a copolymerisable vinyl monomer. The content of the methacrylic and/or acrylic acid unit in the copolymer is in the range of 5 to 50 % by weight, preferably 5 to 40 % by weight. When the content is less than 5 % by weight, the heat resistance is less improved, and the improvement (lowering) of water absorption properties of the copolymer is not sufficient. On the other hand, when the content is more than 50 % by weight, the carboxylic acid unit is remained without ring-closing, and hence, the product shows unfavorably low heat resistance due to water absorption and further production of splash on the back of the formed product due to volatile material.

The vinyl monomer (the term vinyl monomer includes methyl methacrylate and α-methylstyrene) copolymerizable with methacrylic and acrylic acid includes all conventional monomers which are usually used for the production of thermoplastic resins, for example, olefins, vinyl chloride, acrylonitrile, aromatic vinyl compounds, and unsaturated carboxylic acid alkyl esters. Among these, unsaturated carboxylic acid alkyl esters and aromatic vinyl compounds are preferable. These vinyl monomers are used alone or in combination of two or more thereof.

The unsaturated carboxylic acid alkyl esters include methacrylic acid esters and acrylic acid esters, for example, methyl methacrylate, n-butyl methacrylate, t-butyl methacrylate, n-bornyl methacrylate, isobornyl methacrylate, fenchyl methacrylate, cyclohexyl methacrylate, phenyl methacrylate, benzyl methacrylate, dicyclopentanyl methacrylate, methyl acrylate, and butyl acrylate.

The aromatic vinyl compounds includes styrene, and α-methylstyrene.

The raw copolymer used in this invention can be produced by copolymerizing the above-mentioned monomers by conventional polymerization methods, such as suspension polymerization, bulk polymerization, emulsion polymerization, and solution polymerization, but preferably by suspension polymerization or bulk polymerization.

The basic compound used as a ring-closing promoter in this invention include inorganic or organic compounds. The inorganic basic compound includes alkali metal hydroxides or carbonates and alkaline earth metal hydroxides, for example, lithium hydroxide, sodium hydroxide, potassium hydroxide, lithium

carbonate, sodium carbonate, potassium carbonate, calcium hydroxide, magnesium hydroxide, among which sodium hydroxide and potassium hydroxide are preferable.

The organic basic compound includes organic carboxylic acid metal salts, preferably alkali metal salts (e.g. lithium acetate, sodium acetate, potassium acetate, calcium acetate, magnesium acetate, lithium stearate, sodium stearate, and potassium stearate), alkali metal alkoxides (e.g. sodium methoxide, potassium methoxide, sodium ethoxide, and potassium ethoxide)

Other basic compounds such as ammonium salts, amines and imines may also be used, but these compounds induce occasionally coloring of the product, and hence, are restricted in use depending on the utilities of the copolymer.

The ring-closing promoters may be used in any form of solid, aqueous solution or a solution in an organic solvent. The promoter may previously be added to the reaction system in the step of polymerization of monomers at one time or dividedly, or may be mixed to the raw copolymer with a mixer before or during the heat treatment thereof. The amount is in the range of 0.001 to 1 % by weight, preferably 0.01 to 0.5 % by weight, based on the weight of the raw copolymer. When the amount of the promoter is less than 0.001 % by weight, the ring-closing of the methacrylic and/or acrylic acid unit is less effective, and on the other hand, when the amount is over 1 % by weight, the ring-closing is no more significantly promoted, but rather unfavorably causes production of crosslinked product.

The heat treatment of the raw copolymer in this invention can be carried out by any conventional method. It is preferably carried out by supplying the raw material together with the ring-closing promoter to an apparatus having an ability to remove volatile materials by reducing the pressure, such as a heating furnace or extruder equipped with a vacuum pump or other vacuumizing device, particularly a deaeration extruder which is operated at a temperature higher than the softening point of the raw copolymer.

The heat treatment is usually carried out at a temperature of 150 to 350 °C, preferably 220 to 320 °C. When the temperature is lower than the lower limit, the ring-closing of the carboxylic acid unit into an anhydride unit is made insufficiently, and on the other hand, when the temperature is higher than the upper limit, the product is colored significantly, and the product is disadvantageously inferior in the transparency. By the heat treatment, 70 % by weight or more, preferably 80 % by weight or more, of the methacrylic and/or acrylic acid unit in the copolymer is converted into the six-membered cyclic anhydride unit. The resulting copolymer thus heat-treated has a structure containing 3 to 50 % by weight, preferably 5 to 30 % by weight, of six-membered cyclic anhydride unit.

When the ring-closing promoter is used for the raw material produced from methacrylic ester and acrylic ester monomer, the content of the six-membered cyclic anhydride unit in the copolymer may occasionally over 100 % by weight based on the methacrylic and/or acrylic acid unit in the raw copolymer.

According to this invention, the ring-closing ratio of the carboxylic acid unit into the six-membered cyclic anhydride unit is very high, and hence, even in the case of a raw copolymer having a high content of methacrylic and/or acrylic acid unit, the non-ring-closed methacrylic and/or acrylic acid unit is less remained in the copolymer, usually less than 10 % by weight, preferably less than 5 % by weight. Thus, the copolymer product obtained by this invention has significantly improved resistance to crazing and water resistance without any occurrence of splash on the back of formed product which is usually observed in the conventional formed products obtained from a copolymer having less conversion into anhydride unit.

The present invention is illustrated by the following Examples but should not be construed to be limited thereto.

In the examples, the analysis or measurement of various properties of the product is carried out as follows.

(1) Measurement of the six-membered cyclic anhydride unit:

In the same manner as described in U.K. Patent 1,437,176, it is measured by measuring absorbance at 1805 $cm^{-1}$ which is peculiar to the acid anhydride structure, by using an infrared spectrophotometer.

(2) Ring-closing ratio:

The ring-closing ratio is calculated by the following equation.

$$\text{Ring-closing ratio} = \frac{\text{Amount of the produced anhydride unit* (g)}}{\text{Amount of methacrylic and/or acrylic acid as used (g)}} \times 100$$

*) The produced anhydride unit has the following formula:

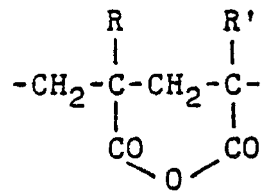

wherein R and R′ are each H or $CH_3$, and the ratio of H and $CH_3$ is assumed to be the same as the ratio of methacrylic acid and acrylic acid as used.

(3) Melt flow index (MI):

It is measured by the method as described in ASTM D-1238 under the conditions of 230° C and a load of 3.8 kg.

(4) Heat distortion temperature (HDT):

It is measured by the method as described in ASTM D-648 under the conditions of 18.6 kg.f/cm$^2$.

(5) Appearance of formed product:

A test sample (15 cm x 15 cm x 3 mm) is prepared by forming the copolymer by an injection molding, and the production of splash is observed with naked eye.

Example 1

A 5 liter autoclave provided with a stirrer is charged with water (2.2 liter) and hydroxyethyl cellulose (2.4 g), and thereto are added methacrylic acid (160 g), methyl methacrylate (1440 g), laurylmercaptane (6.4 g) and lauroyl peroxide (5.6 g), and the mixture is polymerized by heating at 80° C with agitation for one hour and 40 minutes. After raising the temperature to 98° C, the mixture is further agitated for one hour, by which the polymerization reaction is completed. The polymerization mixture is cooled, and the polymer is separated by centrifugation, washed with water and dried at 80° C. The polymer beads thus obtained has a content of methyl methacrylate of 90 % by weight and methacrylic acid of 10 % by weight. The dried beads (100 parts by weight) are mixed with sodium hydroxide (0.03 part by weight) with a Henschel mixer and then pelletized with a 40 mm deaeration extruder (VS 40-28 type, L/D = 28, manufactured by Tanabe Plastic Kikai K.K.) at a screw rotation speed of 50 rpm at a resin temperature of 280° C.

As to the pellets, there were measured the ring-closing ratio and melt flow index (MI). Besides, the pellets were formed by injection molding at 260° C, and the surface of the formed product was observed, and further, the heat distortion temperature (HDT) was measured. The results are shown in Table 1.

Examples 2 to 4

In the same manner as described in Example 1 except that the used amounts of the materials are varied as shown in Table 1, there are produced various products.

The properties of the products were measured likewise. The results are also shown in Table 1.

Reference Example 1

In the same manner as described in Example 1 except that no sodium hydroxide is added, there is produced a copolymer product.

The properties of the product were measured likewise. The results are also shown in Table 1.

<u>Table 1</u>

| Ex. No. | Amount of materials*1 as used (g) | | | Composition*1 of dried beads (wt.%) | | | Amount of NaOH (part by weight) | Resin temp. in heat-treating (°C) | Ring-closing ratio (wt.%) | Properties | | | Appearance of formed product*2 |
|---|---|---|---|---|---|---|---|---|---|---|---|---|---|
| | MMA | MAA | st | MMA unit | MAA unit | st unit | | | | MI (g/10 min) | HDT (°C) | Water absorp. (%) | |
| Ex. 1 | 1440 | 160 | - | 90 | 10 | - | 0.03 | 280 | 120 | 1.3 | 120 | 1.6 | o |
| " 2 | 1520 | 80 | - | 95 | 5 | - | 0.03 | 280 | 122 | 1.5 | 112 | 1.6 | o |
| " 3 | 1120 | 480 | - | 70 | 30 | - | 0.03 | 280 | 95 | 0.5 | 135 | 1.9 | o |
| " 4 | 1360 | 160 | 80 | 85 | 10 | 5 | 0.03 | 280 | 120 | 1.5 | 120 | 1.5 | o |
| Ref. Ex. 1 | 1440 | 160 | - | 90 | 10 | - | - | 280 | 56 | 1.3 | 120 | 2.1 | Δ |

*1) MMA: Methyl methacrylate, MAA: Methacrylic acid, st: Styrene

*2) o: Formed product having excellent appearance
Δ: Splash was slightly observed on the surface of the formed product.

<u>Example 5</u>

A 5 liter autoclave provided with a stirrer is charged with water (2.2 liter) and hydroxyethyl cellulose (2.4 g), and thereto are added methacrylic acid (160 g), styrene (1440 g), tert-dodecylmercaptane (1.6 g) and

benzoyl peroxide (28.8 g), and the mixture is stirred at 90° C for 2.5 hours. After raising the temperture to 100° C, the mixture is further agitated for 30 minutes, by which the polymerization reaction is completed. The polymerization mixture is cooled, and the polymer is separated by centrifugation, washed with water and dried at 70° C. The polymer beads thus obtained has a content of styrene of 90.5 % by weight and methacylic acid of 9.5 % by weight. The beads (100 parts by weight) are mixed with sodium hydroxide (0.03 part by weight) with a Henschel mixer and then pelletized with a 40 mm deaeration extruder in the same manner as described in Example 1.

As to the pellets, the properties were measured in the same manner as described in Example 1 except that the pellets were formed by injection molding at 230° C. The results are shown in Table 2.

Example 6

A 5 liter autoclave provided with a stirrer is charged with water (2.2 liter) and hydroxyethyl cellulose (2.4 g), and thereto are added methacrylic acid (160 g), acrylic acid (80 g), methyl methacrylate (1360 g), laurylmercaptane (6.4 g) and lauroyl peroxide (5.6 g), and the mixture is polymerized by heating at 80° C with agitation for one hour and 40 minutes. After raising the temperture to 98° C, the mixture is further agitated for one hour, by which the polymerization reaction is completed. The polymerization mixture is cooled, and the polymer is separated by centrifugation, washed with water and dried at 80° C. . The polymer beads thus obtained has a content of methacrylic acid of 10 % by weight, acrylic acid of 3 % by weight and methyl methacrylate of 87 % by weight. The beads (100 parts by weight) are mixed with sodium hydroxide (0.03 part by weight) with a Henschel mixer and then pelletized in the same manner as described in Example 1.

As to the pellets, various properties were measured in the same manner as described in Example 1. The results are shown in Table 2.

Examples 7 to 10

In the same manner as described in Example 1 except that the basic compounds as shown in Table 2 are dispersed, there are produced various products.

The properties of the products were measured likewise. The results are also shown in Table 2.

Reference Example 2

In the same manner as described in Example 1 except that sodium hydroxide is added in an amount of 2 parts by weight per 100 parts by weight of the dried beads, there is produced a copolymer product.

The properties of the product were measured likewise. The results are also shown in Table 2.

Table 2

| Ex. No. | Amount of materials*1 as used (g) | | | | Composition*1 of dried beads (wt.%) | | | | Kind of basic compd. (wt. part) | Resin temp. in heat-treating (°C) | Ring-closing ratio (wt.%) | Properties | | | Appearance of formed product*2 |
|---|---|---|---|---|---|---|---|---|---|---|---|---|---|---|---|
| | MMA | MAA | AA | st | MMA unit | MAA unit | AA unit | st unit | | | | MI (g/10 min) | HDT (°C) | Water absorp. (%) | |
| Ex. 5 | - | 160 | - | 1440 | - | 9.5 | - | 90.5 | NaOH (0.03) | 230 | 80 | 7.5 | 118 | 0.5 | o |
| " 6 | 1360 | 160 | 80 | - | 87 | 10 | 3 | - | NaOH (0.03) | 280 | 105 | 1.3 | 122 | 1.7 | o |
| " 7 | 1440 | 160 | - | - | 90 | 10 | - | - | NaOH (0.01) | 280 | 104 | 1.3 | 120 | 1.6 | o |
| " 8 | 1440 | 160 | - | - | 90 | 10 | - | - | NaOH (0.5) | 280 | 127 | 1.2 | 119 | 1.6 | o |
| " 9 | 1440 | 160 | - | - | 90 | 10 | - | - | KOH (0.03) | 280 | 123 | 1.3 | 120 | 1.6 | o |
| " 10 | 1440 | 160 | - | - | 90 | 10 | - | - | $Ca(OH)_2$ (0.03) | 280 | 94 | 1.0 | 118 | 1.8 | o |
| Ref. Ex. 2 | 1440 | 160 | - | - | 90 | 10 | - | - | NaOH (2) | 280 | 132 | 0.2 | 120 | 1.6 | x |

*1) MMA: Methyl methacrylate, MAA: Methacrylic acid, AA: Acrylic acid, st: Styrene

*2) o: Formed product having excellent appearance
x: Formed product having surface roughness due to less fluidity because of the presence of gel materials

Example 11

A 5 liter autoclave provided with a stirrer is charged with water (2.2 liter) and hydroxyethyl cellulose (2.4 g), and thereto are added methacrylic acid (160 g), styrene (1440 g), tert-dodecylmercaptane (1.6 g) and

benzoyl peroxide (28.8 g), and the mixture is stirred at 90 °C for 2.5 hours. After raising the temperture to 100 °C, the mixture is further agitated for 30 minutes, by which the polymerization reaction is completed. The polymerization mixture is cooled, and the polymer is separated by centrifugation, washed with water and dried at 70 °C. The polymer beads thus obtained has a content of styrene of 90.5 % by weight and methacylic acid of 9.5 % by weight. The beads (100 parts by weight) are mixed with sodium methoxide (0.03 part by weight) with a Henschel mixer and then pelletized with a 40 mm deaeration extruder in the same manner as described in Example 1.

As to the pellets, the properties were measured in the same manner as described in Example 1 except that the pellets were formed by injection molding at 230 °C. The results are shown in Table 3.

Example 12

A 5 liter autoclave provided with a stirrer is charged with water (2.2 liter) and hydroxyethyl cellulose (2.4 g), and thereto are added methacrylic acid (160 g), acrylic acid (80 g), methyl methacrylate (1360 g), laurylmercaptane (6.4 g) and lauroyl peroxide (5.6 g), and the mixture is polymerized by heating at 80 °C with agitation for one hour and 40 minutes. After raising the temperature to 98 °C, the mixture is further agitated for one hour, by which the polymerization reaction is completed. The polymerization mixture is cooled, and the polymer is separated by centrifugation, washed with water and dried at 80 °C. The polymer beads thus obtained has a content of methacrylic acid of 10 % by weight, acrylic acid of 3 % by weight and methyl methacrylate of 87 % by weight. The beads (100 parts by weight) are mixed with sodium methoxide (0.03 part by weight) with a Henschel mixer and then pelletized in the same manner as described in Example 1.

As to the pellets, various properties were measured in the same manner as described in Example 1. The results are shown in Table 3.

Examples 13 to 19

In the same manner as described in Example 12 except that the basic compounds as shown in Table 3 are dispersed and the heat-treating temperature is varied, there are produced various products.

The properties of the products were measured likewise. The results are also shown in Table 3.

Reference Example 3

In the same manner as described in Example 1 except that sodium methoxide is added in an amount of 2 parts by weight per 100 parts by weight of the dried beads, there is produced a copolymer product.

The properties of the product were measured likewise. The results are also shown in Table 3.

Table 3

| Ex. No. | Amount of materials*1 as used (g) | | | | Composition*1 of dried beads (wt.%) | | | | Kind of basic compd.*2 (wt. part) | Resin temp. in heat-treating (°C) | Ring-closing ratio (wt.%) | Properties | | | Appearance of formed product*3 |
|---|---|---|---|---|---|---|---|---|---|---|---|---|---|---|---|
| | MMA | MAA | AA | st | MMA unit | MAA unit | AA unit | st unit | | | | MI (g/10 min) | HDT (°C) | Water absorp. (%) | |
| Ex.11 | - | 160 | - | 1440 | - | 9.5 | - | 90.5 | NaOMe (0.03) | 230 | 80 | 7.5 | 118 | 0.5 | o |
| " 12 | 1360 | 160 | 80 | - | 87 | 10 | 3 | - | NaOMe (0.03) | 280 | 105 | 1.3 | 122 | 1.7 | o |
| " 13 | 1440 | 160 | - | - | 90 | 10 | - | - | NaOMe (0.01) | 280 | 104 | 1.3 | 120 | 1.6 | o |
| " 14 | 1440 | 160 | - | - | 90 | 10 | - | - | NaOMe (0.5) | 280 | 127 | 1.2 | 119 | 1.6 | o |
| " 15 | 1440 | 160 | - | - | 90 | 10 | - | - | Guanid. (0.03) | 280 | 88 | 1.4 | 120 | 1.7 | o |
| " 16 | 1440 | 160 | - | - | 90 | 10 | - | - | Imidaz. (0.1) | 280 | 97 | 1.3 | 120 | 1.7 | o |
| " 17 | 1440 | 160 | - | - | 90 | 10 | - | - | DBU (0.1) | 280 | 120 | 1.9 | 120 | 1.6 | o |

- to be continued -

Table 3 (Continue)

| Ex. No. | Amount of materials*1 as used (g) | | | | Composition*1 of dried beads (wt.%) | | | | Kind of basic compd.*2 (wt. part) | Resin temp. in heat-treating (°C) | Ring-closing ratio (wt.%) | Properties | | | Appearance of formed product*3 |
|---|---|---|---|---|---|---|---|---|---|---|---|---|---|---|---|
| | MMA | MAA | AA | st | MMA unit | MAA unit | AA unit | st unit | | | | MI (g/10 min) | HDT (°C) | Water absorp. (%) | |
| Ex.18 | 1440 | 160 | - | - | 90 | 10 | - | - | Tri-EtN (0.04) | 280 | 80 | 1.3 | 120 | 1.8 | o |
| " 19 | 1440 | 160 | - | - | 90 | 10 | - | - | NaOMe (0.5) | 300 | 80 | 1.3 | 120 | 1.9 | o |
| Ref. Ex. 3 | 1440 | 160 | - | - | 90 | 10 | - | - | NaOMe (2) | 280 | 132 | 0.2 | 120 | 1.6 | x |

*1) MMA: Methyl methacrylate, MAA: Methacrylic acid, AA: Acrylic acid, st: Styrene

*2) NaOMe: Sodium methoxide, Guanid.: Guanidine, Imidaz.: 2-Phenyl-4-methylimidazole, DBU: 1,8-Diazabicyclo[5.4.0]undecene-7, Tri-EtN: Triethylamine

*3) o: Formed product having excellent appearance
x: Formed product having surface roughness due to less fluidity because of the presence of gel materials

Example 20

A 5 liter autoclave provided with a stirrer is charged with water (2.2 liter) and hydroxyethyl cellulose (2.4 g), and thereto are added methacrylic acid (160 g), methyl methacrylate (1440 g), laurylmercaptane (6.4 g)

and lauroyl peroxide (5.6 g), and the mixture is polymerized by heating at 80° C with agitation for one hour and 40 minutes. After raising the temperture to 98° C, the mixture is further agitated for one hour, by which the polymerization reaction is completed. The polymerization mixture is cooled, and the polymer is separated by centrifugation, washed with water and dried at 80° C. The polymer beads thus obtained has a content of methyl methacrylate of 90 % by weight and methacylic acid of 10 % by weight. The dried beads (100 parts by weight) are mixed with sodium methoxide (0.03 part by weight) with a Henschel mixer, and the mixture is spread on a stainless steel plate, and the plate is allowed to stand in an oven at 300° C under reduced pressure for 30 minutes. After cooling, the resultant is crushed to give pellets.

As to the pellets, there were measured the ring-closing ratio and melt flow index (MI). Besides, the pellets were formed by injection molding at 260° C, and the surface of the formed product was observed, and further, the heat distortion temperature (HDT) was measured. The results are shown in Table 4.

Example 21

A 5 liter autoclave provided with a stirrer is charged with water (2.2 liter) and hydroxyethyl cellulose (2.4 g), and thereto are added methacrylic acid (160 g), styrene (1440 g), tert-dodecylmercaptane (1.6 g) and benzoyl peroxide (28.8 g), and the mixture is stirred at 90° C for 2.5 hours. After raising the temperature to 100° C, the mixture is further agitated for 30 minutes, by which the polymerization reaction is completed. The polymerization mixture is cooled, and the polymer is separated by centrifugation, washed with water and dried at 70° C. The polymer beads thus obtained has a content of styrene of 90.5 % by weight and methacylic acid of 9.5 % by weight. The beads (100 parts by weight) are mixed with potassium acetate (0.3 part by weight) with a Henschel mixer and then pelletized with a 40 mm deaeration extruder in the same manner as described in Example 1.

As to the pellets, the properties were measured in the same manner as described in Example 1 except that the pellets were formed by injection molding at 230° C. The results are shown in Table 4.

Example 22

A 5 liter autoclave provided with a stirrer is charged with water (2.2 liter) and hydroxyethyl cellulose (2.4 g), and thereto are added methacrylic acid (160 g), acrylic acid (80 g), methyl methacrylate (1360 g), laurylmercaptane (6.4 g) and lauroyl peroxide (5.6 g), and the mixture is polymerized by heating at 80° C with agitation for one hour and 40 minutes. After raising the temperture to 98° C, the mixture is further agitated for one hour, by which the polymerization reaction is completed. The polymerization mixture is cooled, and the polymer is separated by centrifugation, washed with water and dried at 80° C. The polymer beads thus obtained has a content of methacrylic acid of 10 % by weight, acrylic acid of 3 % by weight and methyl methacrylate of 87 % by weight. The beads (100 parts by weight) are mixed with potassium acetate (0.3 part by weight) with a Henschel mixer and then pelletized in the same manner as described in Example 1.

As to the pellets, various properties were measured in the same manner as described in Example 1. The results are shown in Table 4.

Examples 23 to 27

In the same manner as described in Example 1 except that the basic compounds as shown in Table 4 are dispersed, there are produced various products.

The properties of the products were measured likewise. The results are also shown in Table 4.

Reference Example 4

In the same manner as described in Example 1 except that potassium acetate is added in an amount of 2 parts by weight per 100 parts by weight of the dried beads, there is produced a copolymer product.

The properties of the product were measured likewise. The results are also shown in Table 4.

Example 28

In the same manner as described in Example 20 except that potassium acetate (0.3 part by weight) is used instead of sodium methoxide (0.03 part by weight), there is produced a copolymer product.

The properties of the product were measured likewise. The results are also shown in Table 4.

Table 4

| Ex. No. | Amount of materials*1 as used (g) | | | | Composition*1 of dried beads (wt.%) | | | | Kind of basic compd.*2 (wt. part) | Resin temp. in heat-treating (°C) | Ring-closing ratio (wt.%) | Properties | | | Appearance of formed product*3 |
|---|---|---|---|---|---|---|---|---|---|---|---|---|---|---|---|
| | MMA | MAA | AA | st | MMA unit | MAA unit | AA unit | st unit | | | | MI (g/10 min) | HDT (°C) | Water absorp. (%) | |
| Ex.20 | 1440 | 160 | - | - | 90 | 10 | - | - | NaOMe (0.03) | 300 | 80 | 1.3 | 120 | 1.8 | o |
| " 21 | - | 160 | - | 1440 | - | 9.5 | - | 90.5 | KOAc (0.3) | 230 | 80 | 7.2 | 118 | 0.5 | o |
| " 22 | 1360 | 160 | 80 | - | 87 | 10 | 3 | - | KOAc (0.3) | 280 | 105 | 1.3 | 122 | 1.7 | o |
| " 23 | 1440 | 160 | - | - | 90 | 10 | - | - | KOAc (0.03) | 280 | 86 | 1.3 | 120 | 1.8 | o |
| " 24 | 1440 | 160 | - | - | 90 | 10 | - | - | NaOAc (0.3) | 280 | 116 | 1.3 | 120 | 1.6 | o |
| " 25 | 1440 | 160 | - | - | 90 | 10 | - | - | $K_2CO_3$ (0.1) | 280 | 119 | 1.3 | 120 | 1.6 | o |
| " 26 | 1440 | 160 | - | - | 90 | 10 | - | - | $Na_2CO_3$ (0.1) | 280 | 114 | 1.3 | 120 | 1.6 | o |

- to be continued -

Table 4 (Continue)

| Ex. No. | Amount of materials*1 as used (g) | | | | Composition*1 of dried beads (wt.%) | | | | Kind of basic compd.*2 (wt. part) | Resin temp. in heat-treating (°C) | Ring-closing ratio (wt.%) | Properties | | | Appearance of formed product*3 |
|---|---|---|---|---|---|---|---|---|---|---|---|---|---|---|---|
| | MMA | MAA | AA | st | MMA unit | MAA unit | AA unit | st unit | | | | MI (g/10 min) | HDT (°C) | Water absorp. (%) | |
| Ex.27 | 1440 | 160 | - | - | 90 | 10 | - | - | NaOSte (0.2) | 280 | 116 | 1.4 | 120 | 1.6 | o |
| " 28 | 1440 | 160 | - | - | 90 | 10 | - | - | KOAc (0.3) | 300 | 80 | 1.3 | 119 | 1.9 | o |
| Ref. Ex. 4 | 1440 | 160 | - | - | 90 | 10 | - | - | KOAc (2) | 280 | 120 | 0.2 | 120 | 1.6 | x |

*1) MMA: Methyl methacrylate, MAA: Methacrylic acid, AA: Acrylic acid, st: Styrene

*2) NaOMe: Sodium methylate, KOAc: Potassium acetate, NaOAc: Sodium acetate, NaOSte: Sodium stearate

*3) o: Formed product having excellent appearance
x: Formed product having surface roughness due to less fluidity because of the presence of gel materials

## Claims

1. A process for the production of a copolymer having excellent heat distortion properties, which comprises heat-treating a raw copolymer comprising (1) vinyl monomer units and (2) methacrylic acid

units and/or acrylic acid units in the presence of 0.001 to 1% by weight of as a ring-closing promoter a basic compound thereby to convert methacrylic and/or acrylic acid units into six-membered cyclic anhydride units, and wherein the raw copolymer has a content of methacrylic and/or acrylic acid units of 5 to 50% by weight.

2. The process according to claim 1, wherein the vinyl monomer units are selected from the group consisting of methacrylic ester units, acrylic ester units and aromatic vinyl compound units.

3. The process according to claim 1 or claim 2, wherein the basic compound is a member selected from the group consisting of alkali metal hydroxides or carbonates and alkaline earth metal hydroxides.

4. The process according to claim 1 or claim 2, wherein the basic compound is an organic carboxylic acid alkali metal salt.

5. The process according to claim 1 or claim 2 wherein the basic compound is an alkali metal alkoxide.

6. The process according to any one of the preceding claims, wherein the heat treatment is carried out at a temperature of 150 to 350 °C.

7. The process according to claim 2, wherein the vinyl monomer units are methyl methacrylate or α-methyl styrene.

**Revendications**

1. Un procédé de production d'un copolymère ayant des propriétés excellentes de distorsion thermique, qui consiste à traiter thermiquement un copolymère brut comprenant (1) des unités de monomère vinylique et (2) des unités d'acide méthacrylique et/ou des unités d'acide acrylique en présence de 0.001 à 1% en poids, en tant que promoteur de fermeture de cycle, d'un composé basique afin de convertir es unités d'acide méthacrylique et/ou d'acide acrylique en unités d'anhydride cyclique à six chaînons, ledit copolymère brut ayant une teneur en unités d'acide méthacrylique et/ou d'acide acrylique de 5 à 50% en poids.

2. Le procédé selon la revendication 1, selon lequel les unités de monomère vinylique sont choisies dans le groupe comprenant des unités d'ester méthacrylique, des unités d'ester acrylique et des unités de composé vinylique aromatique.

3. Le procédé selon la revendication 1 ou 2, selon lequel le composé basique est un élément choisi dans le groupe comprenant les hydroxydes ou les carbonates de métaux alcalins et les hydroxydes de métaux alcalino-terreux.

4. Le procédé selon la revendication 1 ou 2 selon lequel le composé basique est un sel de métal alcalin d'un acide carboxylique organique.

5. Le procédé selon la revendication 1 ou 2 selon lequel le composé basique est un alcoolate de métal alcalin.

6. Le procédé selon l'une quelconque des revendications précédentes selon lequel le traitement thermique est conduit à une température de 150 à 350 °C.

7. Le procédé selon la revendication 2, selon lequel les unités de monomère vinylique sont le méthacrylate de méthyle ou l'α-méthylstyrène.

**Patentansprüche**

1. Verfahren zur Herstellung eines Copolymers mit ausgezeichneten Wärmeverformungseigenschaften umfassend die Wärmebehandlung eines Roh-Copolymers, welches (1) Vinylmonomereinheiten und (2) Methacrylsäureeinheiten und/oder Acrylsäureeinheiten enthält, in Gegenwart von 0,001 bis 1 Gew.-% einer basischen Verbindung als Ringschluß-Promotor, wodurch Methacryl- und/oder Acrylsäureeinheiten in 6-gliedrige cyclische Anhydrideinheiten überführt werden, und wobei das Roh-Copolymer einen Gehalt an Methacryl- und/oder Acrylsäureeinheiten von 5 bis 50 Gew. -% aufweist.

2. Verfahren nach Anspruch 1, wobei die Vinylmonomereinheiten ausgewählt sind aus der Gruppe, die aus Methacrylsäureestereinheiten, Acrylsäureestereinheiten und aromatischen Vinylverbindungen besteht.

3. Verfahren nach Anspruch 1 oder 2, wobei die basische Verbindung aus der Gruppe Alkalimetallhydroxide oder -carbonate und Erdalkalimetallhydroxide ausgewählt ist.

4. Verfahren nach Anspruch 1 oder 2, wobei die basische Verbindung ein organisches Carbonsäurealkalimetallsalz ist.

5. Verfahren nach Anspruch 1 oder 2, wobei die basische Verbindung ein Alkalimetallalkoxid ist.

6. Verfahren nach einem der vorstehenden Ansprüche, wobei die Wärmebehandlung bei einer Temperatur von 150° bis 350° C durchgeführt wird.

7. Verfahren nach Anspruch 2, wobei die Vinylmonomereinheiten Methylmethacrylat oder $\alpha$-Methylstyrol sind.